Europäisches Patentamt

**European Patent Office**

**Office européen des brevets**

(19)

(11) Numéro de publication : **0 120 747**
**B1**

(12) FASCICULE DE BREVET EUROPÉEN

(45) Date de publication du fascicule du brevet :
10.09.86

(51) Int. Cl.⁴ : **B 60 N 1/00**

(21) Numéro de dépôt : 84400399.6

(22) Date de dépôt : 28.02.84

(54) **Armature tubulaire, notamment pour siège de véhicule automobile.**

(30) Priorité : 01.03.83 FR 8303340

(43) Date de publication de la demande :
03.10.84 Bulletin 84/40

(45) Mention de la délivrance du brevet :
10.09.86 Bulletin 86/37

(84) Etats contractants désignés :
BE GB IT LU NL SE

(56) Documents cités :
DE-A- 2 930 696
FR-A- 1 604 581
FR-A- 2 327 888
US-A- 3 544 164

(73) Titulaire : **CYCLES PEUGEOT Société dite:**
**Beaulieu**
**F-25700 Valentigney (FR)**

(72) Inventeur : **Fourrey, François**
**34, Rue du Petit Chênois**
**F-25200 Montbeliard (FR)**

(74) Mandataire : **Moncheny, Michel et al**
**c/o Cabinet Lavoix 2 Place d'Estienne d'Orves**
**F-75441 Paris Cedex 09 (FR)**

Jouve, 18, rue St-Denis, 75001 Paris, France

## Description

Les armatures tubulaires sont connues et appréciées pour leur rigidité et leur résistance. C'est pourquoi elles sont de plus en plus utilisées, notamment pour les sièges de voiture automobile ou analogue.

Les armatures de siège de voiture doivent en effet avoir une rigidité importante, pour pouvoir absorber des contraintes mécaniques diverses, telles que la pression du corps du conducteur, des tractions ou des poussées exercées sur le dossier par le passager arrière, ou même, dans certains cas, des poussées de la partie lombaire du conducteur ou du passager avant, en vue du réglage de l'inclinaison du dossier, ce qui sollicite très fortement la structure de ce dernier. Toutefois, ces armatures doivent également répondre à des efforts brutaux, tels que freinage brutal ou collision, et dans ce cas elles ne doivent pas avoir une rigidité trop grande pour ne pas constituer un danger pour les occupants, en particulier dans la partie haute du siège, au niveau de la nuque du passager avant.

L'invention a donc pour but de réaliser une armature qui réponde à ces deux exigences, a priori contradictoires.

On connaît du brevet US-A-3 544 164 une armature tubulaire pour siège de véhicule, comportant dans sa partie exposée aux chocs des édentations transversales obtenues par enfoncement du tube, permettant une déformation de l'armature sous l'effet d'un choc essentiellement vertical.

La présente invention a pour objet une armature tubulaire qui comporte, dans sa partie exposée aux chocs, au moins une fente longitudinale et étroite pratiquée dans la paroi du tube tournée vers l'intérieur de l'armature.

Selon un mode de réalisation préféré, chaque fente est obtenue par poinçonnage en repoussant la matière latéralement vers l'intérieur.

Grâce à cette disposition l'armature tubulaire peut se déformer progressivement sous l'action d'un choc et absorber ce choc sans former de saillie ou autre élément dangereux, mais conserve une rigidité suffisante vis-à-vis des autres contraintes.

De préférence, l'armature comporte plusieurs fentes. Par exemple, une armature de siège comporte dans la partie supérieure du dossier trois fentes alignées, séparées par des portions fermées de grande rigidité.

L'invention s'étend également à un outil d'incision de tube permettant la réalisation de l'armature. Cet outil est constitué par une lame plate, dont l'une au moins des extrémités forme une pointe entre deux bords concaves en arcs de cercle, d'enroulement latéral progressif du matériau découpé.

La fente ou incision est ainsi pratiquée sans enlèvement de matière ni formation d'aspérité tranchante, le matériau découpé s'enroulant en boucle à l'intérieur du tube.

La description ci-dessous d'un mode de réalisation donné à titre d'exemple non limitatif, et représenté aux dessins annexés, fera d'ailleurs ressortir les avantages et caractéristiques de l'invention.

Sur ces dessins :

la figure 1 est une vue en perspective de la partie supérieure de l'armature du dossier d'un siège de véhicule, posée à plat ;

la figure 2 est une vue partielle à plus grande échelle, de dessus, de la partie d'armature de la figure 1 ;

la figure 3 est une vue écorchée d'une portion d'armature selon l'invention ;

la figure 4 est une vue en plan d'un outil d'incision de l'armature ;

la figure 5 est une vue en coupe de l'outil de la figure 4.

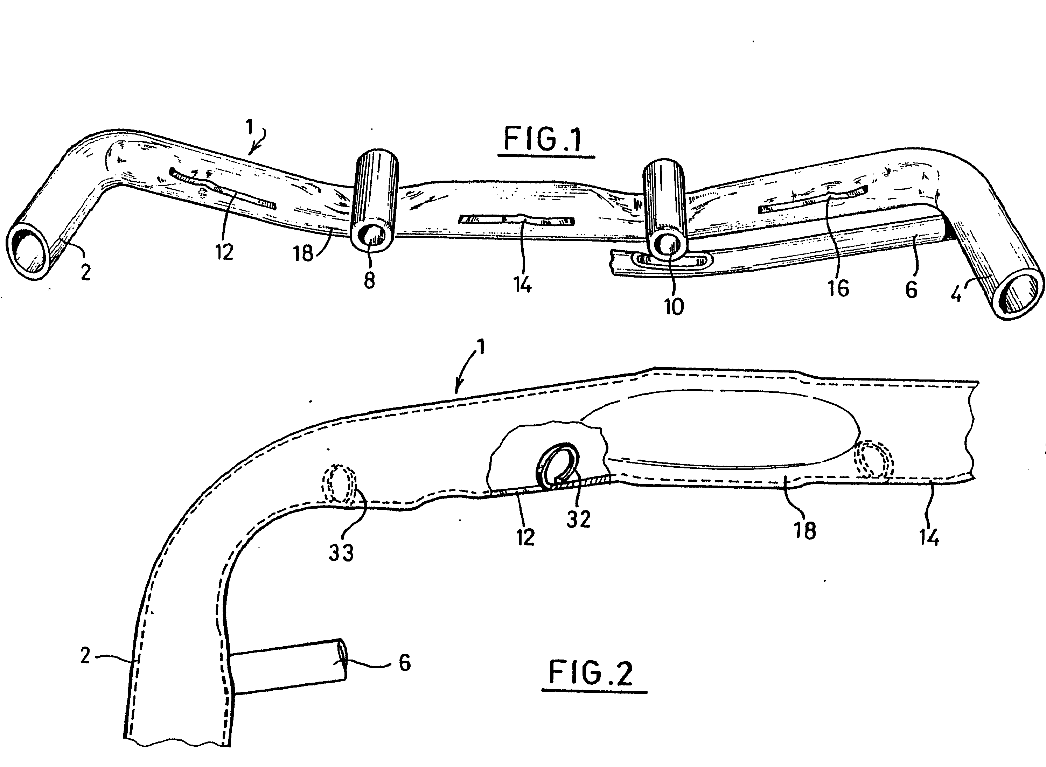

La portion d'armature représentée sur les figures 1 et 2 forme la partie supérieure d'un dossier de siège et est constituée par un tube 1 sensiblement rectiligne, qui est recourbé à ses deux extrémités pour former deux montants 2 et 4, respectivement. Des traverses, telles que celle indiquée partiellement en 6, relient de préférence les montants 2 et 4, tandis que des manchons 8, 10, fixés transversalement au tube 1 permettent la fixation de ressorts, ou analogues, d'appui de l'utilisateur.

Entre les manchons 8, 10, et même de part et d'autre de ceux-ci, l'armature comporte des fentes longitudinales 12, 14, 16, qui sont étroites et traversent la paroi du tube tournée vers l'intérieur de l'armature, c'est-à-dire vers la traverse 6. Les fentes 12, 14, 16, sont pratiquement alignées et sensiblement identiques, mais elles sont espacées les unes des autres par des parties fermées 18, telles que celles formées par les tubes non fendus qui supportent les manchons 8 et 10. La longueur de chaque fente est, de préférence, inférieure à la distance qui la sépare de la fente voisine, c'est-à-dire à la longueur de la partie fermée intermédiaire 18. Dans le cas de l'armature de siège de voiture représentée, chaque fente 12, 14, 16 a, par exemple, une longueur de l'ordre de 5 à 6 cm, tandis que la partie fermée 18 est d'environ 10 cm.

Par ailleurs, les fentes sont obtenues de préférence par un procédé de poinçonnage, de sorte que leurs bords sont légèrement enfoncés vers l'intérieur du tube et ne forment aucune saillie coupante risquant de présenter un danger pour l'utilisateur.

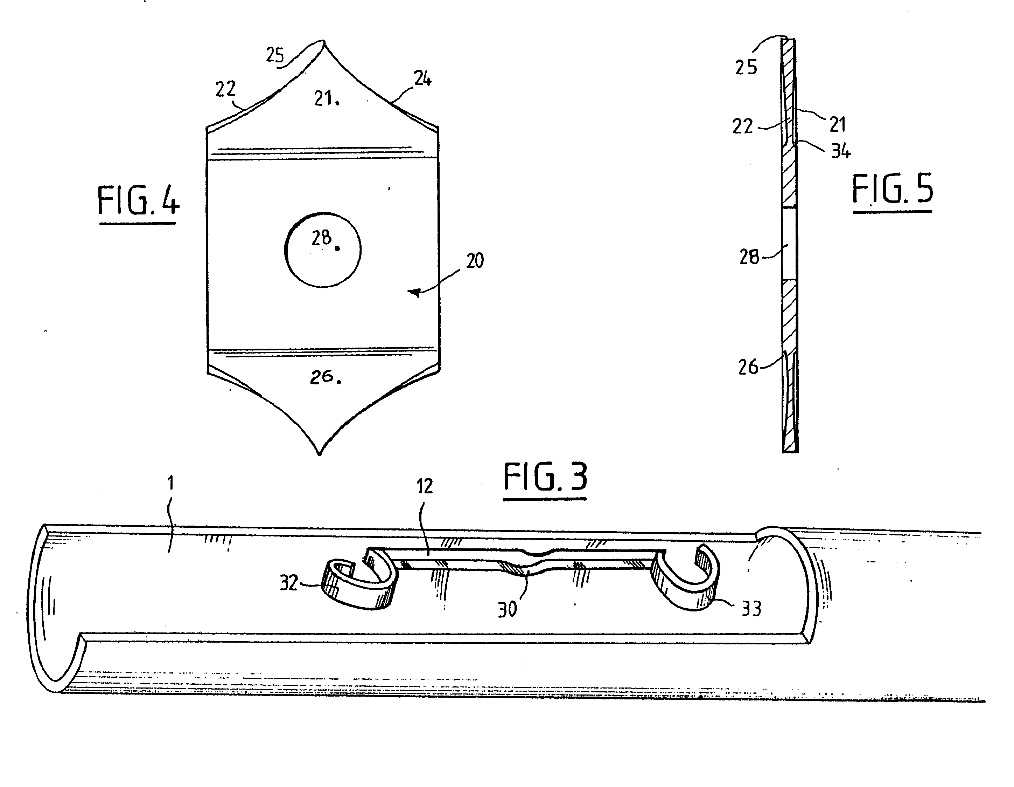

Selon un mode de réalisation préféré, ce poinçonnage est effectué au moyen d'un outil plat, ou lame, 20 (fig. 4 et 5) qui est prolongé par une pointe 21 délimitée par deux bords incurvés en arc de cercle, légèrement concaves, 22, 24, qui se rejoignent en une arête vive 25. Selon le mode de réalisation représenté sur la figure 4, la lame 20 est réversible et comporte une seconde pointe, 26, identique à la première, à son extrémité opposée. Un trou 28, percé dans sa partie cen-

trale, permet son serrage dans un organe de commande approprié.

Lors de l'enfoncement de la lame 20 dans le tube 1, la pointe 25 repousse légèrement le métal vers l'intérieur du tube, en 30, et le perfore (fig. 3), puis au fur et à mesure de la pénétration de la lame 20, les bords incurvés 22 et 24 découpent des copeaux de métal et, en les repoussant latéralement à l'intérieur du tube, les enroulent en boucles 32, 33, à chaque extrémité de la fente, comme le montre la figure 3. Il n'est pas nécessaire d'enlever les copeaux ainsi formés ; l'outil peut simplement être retiré par un déplacement en sens inverse. La fente ne présente aucune aspérité tranchante sur la surface externe du tube.

De préférence, comme le montre la figure 5, la pointe 21 ou 26 comporte une dépouille 34 qui réduit l'épaisseur de sa jonction à la lame proprement dite. Le déplacement de retrait de la lame hors de la fente qui vient d'être découpée s'effectue ainsi avec un minimum de frottement.

Bien entendu la présence des fentes réduit la rigidité du tube en permettant une déformation mécanique locale. Toutefois, grâce à la position de ces fentes du côté interne du tube, c'est-à-dire du côté le moins exposé aux chocs ou autres contraintes, cette déformation est progressive et ne fait jamais apparaître de saillies dangereuses. Un choc brutal, qu'il provienne de l'arrière en étant dû par exemple à la projection vers l'avant du passager arrière, ou de l'avant en étant provoqué par la tête de l'utilisateur du siège, est pratiquement toujours reçu par le tube 1 en un point diamétralement opposé à la fente, ou relativement éloigné de celle-ci. En conséquence, selon la position du point d'impact par rapport à la pointe centrale 30 de cette fente, et l'importance de cet impact, les bords de la portion centrale de la fente s'écartent l'un de l'autre, ou l'extrémité de la fente se referme progressivement.

Une telle déformation absorbe l'énergie du choc et empêche sa transmission à l'utilisateur ou à un autre passager.

Au contraire, en utilisation normale, l'affaiblissement dû aux fentes est insuffisant pour empêcher l'armature de résister aux contraintes mécaniques habituelles. On a constaté en effet que, malgré les fentes, l'armature conserve la rigidité nécessaire et même que les portions non fendues qui séparent les fentes répondent facilement aux exigences de très grande rigidité de la réglementation.

La capacité de déformation mécanique locale du tube sous l'effet d'un choc, ajoutée à l'armature, ne nuit donc pas à ses caractéristiques de rigidité mais lui permet, au contraire, d'être sûre et même protectrice pour l'utilisateur.

Bien entendu l'invention n'est pas limitée aux armatures de siège de véhicule automobile, mais s'étend à toutes les armatures ou analogues qui doivent simultanément présenter une grande rigidité et être susceptibles d'absorber des chocs éventuels.

## Revendications

1. Armature tubulaire, notamment pour siège de véhicule automobile, caractérisée en ce qu'elle comporte dans sa partie exposée aux chocs, au moins une fente longitudinale (12, 14, 16), étroite, qui est pratiquée localement dans la paroi du tube (1) tournée vers l'intérieur de l'armature et permet une déformation locale de la section du tube sous l'effet d'un choc.

2. Armature suivant la revendication 1, caractérisée en ce que chaque fente (12, 14, 16) est obtenue par poinçonnage en repoussant la matière latéralement vers l'intérieur du tube de l'armature.

3. Armature suivant la revendication 2, caractérisée en ce que, lors du poinçonnage, le métal découpé a été enroulé latéralement (24, 32, 33), à chaque extrémité de la fente.

4. Armature suivant l'une des revendications 1 à 3, caractérisée en ce qu'elle comporte à la partie supérieure du dossier du siège, trois fentes alignées (12, 14, 16), séparées par des parties non fendues (18) plus rigides.

5. Armature suivant la revendication 4, caractérisée en ce que les portions (18) de tube non fendu séparant les fentes sont plus longues que les fentes (12, 14, 16) elles-mêmes.

6. Outil de poinçonnage pour la fabrication d'un tube d'armature suivant l'une des revendications 1 à 5, caractérisé en ce qu'il comporte une lame plate (20) munie à l'une au moins de ses extrémités d'une pointe (21) délimitée par deux bords incurvés concaves (22, 24), se coupant selon une arête vive (25).

7. Outil suivant la revendication 6, caractérisé en ce qu'il est réversible et comporte deux pointes identiques, une à chaque extrémité de la lame (20).

## Claims

1. A tubular framework, in particular for a motor vehicle seat structure, characterised in that it comprises in the part thereof exposed to impacts, at least one narrow longitudinal slot (12, 14, 16) which is provided locally in the wall of the tube (1) facing toward the interior of the framework and permits a localized deformation of the section of the tube under the effect of an impact.

2. A framework according to claim 1, characterised in that each slot (12, 14, 16) is obtained by a punching operation which urges back the material laterally toward the interior of the tube of the framework.

3. A framework according to claim 2, characterised in that, in the course of the punching operation, the punched metal is laterally rolled back (24, 32, 33) at each end of the slot.

4. A framework according to one of the claims 1 to 3, characterised in that it comprises in the upper part of the backrest of the seat structure, three aligned slots (12, 14, 16) separated by more rigid non-slotted portions (18).

5. A framework according to claim 4, characterised in that the non-slotted portions (18) of the tube separating the slots are longer than the slots (12, 14, 16) themselves.

6. A punching tool for producing a framework tube according to one of the claims 1 to 5, characterised in that it comprises a flat blade (20) provided at at least one of its ends with a point (21) defined by two concave curved edges (22, 24) intersecting at a sharp edge (25).

7. A tool according to claim 6, characterised in that it is reversible and includes two identical points, one at each end of the blade (20).

## Patentansprüche

1. Röhrenrahmen, insbesondere für Kraftfahrzeugsitz, dadurch gekennzeichnet, daß er in seinem den Stößen ausgesetzten Teil wenigstens einen schmalen Längsspalt (12, 14, 16) aufweist, der lokal in der nach der Rahmeninnenseite gekehrten Wand des Rohres (1) ausgebildet ist und eine lokale Verformung des Rohrabschnitts unter Stoßeinwirkung gestattet.

2. Rahmen nach Anspruch 1, dadurch gekennzeichnet, daß jeder Spalt (12, 14, 16) durch Stanzen erhalten ist, wobei das Material seitlich zum Inneren des Rahmenrohres gedrückt ist.

3. Rahmen nach Anspruch 2, dadurch gekennzeichnet, daß das abgeschnittene Metall beim Stanzen an jedem Ende des Spaltes seitlich eingerollt (24, 32, 33) worden ist.

4. Rahmen nach einem der Ansprüche 1 bis 3, dadurch gekennzeichnet, daß er am Oberteil des Fahrzeugsitzes drei ausgefluchtete Spalte (12, 14, 16) umfaßt, die durch nicht gespaltene, steifere Abschnitte (18) voneinander getrennt sind.

5. Rahmen nach Anspruch 4, dadurch gekennzeichnet, daß die nicht gespaltenen Rohrabschnitte (18), welche die Spalte voneinander trennen, länger als die Spalte (12, 14, 16) selbst sind.

6. Stanzwerkzeug zur Herstellung eines Röhrenrahmens nach einem der Ansprüche 1 bis 5, dadurch gekennzeichnet, daß es eine flache Klinge (20) umfaßt, die an wenigstens einem ihrer Enden mit einer Spitze (21) versehen ist, und die Spitze von zwei gekrümmten, konkaven Rändern (22, 24) begrenzt ist, die sich in einer scharfen Kante (25) schneiden.

7. Werkzeug nach Anspruch 6, dadurch gekennzeichnet, daß es umwendbar ist und zwei identische Spitzen, eine an jedem Ende der Klinge (20), aufweist.

FIG.1

FIG.2

0 120 747

FIG.4

25

22    21.    24

28.

20

26.

FIG.5

25

22    21
        34

28

26

FIG.3

1

12

32

30

33

0 120 747